# EUROPÄISCHE PATENTSCHRIFT

(11) **EP 4 490 717 B1**
(45) Veröffentlichungstag und Bekanntmachung des Hinweises auf die Patenterteilung: **12.03.2025**
(21) Anmeldenummer: 24716745.5
(22) Anmeldetag: 02.04.2024
(51) Int. Cl.: G09B 23/30

(54) **TRAININGSSYSTEM FÜR SIMULIERTE CHIRURGISCHE EINGRIFFE AN EINEM MECHANISCHEN MODELLOBJEKT UND VERFAHREN ZU DESSEN BETRIEB**
TRAINING SYSTEM FOR SIMULATED SURGICAL INTERVENTIONS ON A MECHANICAL MODEL OBJECT, AND METHOD FOR OPERATING SAME
SYSTÈME DE FORMATION POUR INTERVENTIONS CHIRURGICALES SIMULÉES SUR UN OBJET DE MODÈLE MÉCANIQUE, ET SON PROCÉDÉ DE FONCTIONNEMENT

(30) Priorität: 19.04.2023 DE 202023102022 U
(43) Veröffentlichungstag der Anmeldung: 15.01.2025
(73) Patentinhaber: Heinz Kurz GmbH, 72144 Dusslingen (DE)
(72) Erfinder: SANDER, Alexander, 79822 Titisee-Neustadt (DE); STIEGELE, Thomas, 72585 Riederich (DE); MERTENS, Matthias, 24568 Kaltenkirchen (DE)
(74) Vertreter: Kohler Schmid Möbus Patentanwälte
(86) Internationale Anmeldenummer: PCT/EP2024/058843
(87) Internationale Veröffentlichungsnummer: WO 2024/217860

(56) Entgegenhaltungen:
- US-A1- 2014 051 050
- US-A1- 2017 337 848
- LIU GUIFANG ET AL: "Flexible, Equipment-Wearable Piezoelectric Sensor With Piezoelectricity Calibration Enabled by In-Situ Temperature Self-Sensing", IEEE TRANSACTIONS ON INDUSTRIAL ELECTRONICS, IEEE SERVICE CENTER, PISCATAWAY, NJ, USA, vol. 69, no. 6, 14 July 2021 (2021-07-14), pages 6381 - 6390, XP011899893, ISSN: 0278-0046, [retrieved on 20220202], DOI: 10.1109/TIE.2021.3095785
- NIEBUHR NINA I ET AL: "Technical Note: Radiological properties of tissue surrogates used in a multimodality deformable pelvic phantom for MR-guided radiotherapy", MEDICAL PHYSICS, AIP, MELVILLE, NY, US, vol. 43, no. 2, 2016, pages 908 - 916, XP012211178, ISSN: 0094-2405, [retrieved on 19010101], DOI: 10.1118/1.4939874
- DERESHGILT H ASADI ET AL: "Performance Comparison of Novel Single and Bi-Diaphragm PZT Based Valveless Micropumps", JOURNAL O F APPLIED FLUID MECHANICS, 1 January 2020 (2020-01-01), pages 401 - 411, XP093181150, Retrieved from the Internet <URL:https://earsiv.arel.edu.tr/xmlui/handle/20.500.12294/2456> DOI: 10.29252/jafm
- BRETT P. CONNER ET AL: "Making sense of 3-D printing: Creating a map of additive manufacturing products and services", ADDITIVE MANUFACTURING, vol. 1-4, 6 September 2014 (2014-09-06), NL, pages 64 - 76, XP055612067, ISSN: 2214-8604, DOI: 10.1016/j.addma.2014.08.005
- NGUYEN YANN ET AL: "Modifications to a 3D-printed temporal bone model for augmented stapes fixation surgery teaching", EUROPEAN ARCHIVES OF OTO-RHINO-LARYNGOLOGY, SPRINGER BERLIN HEIDELBERG, BERLIN/HEIDELBERG, vol. 274, no. 7, 24 April 2017 (2017-04-24), pages 2733 - 2739, XP036257265, ISSN: 0937-4477, [retrieved on 20170424], DOI: 10.1007/S00405-017-4572-1
- ENTSFELLNER KONRAD ET AL: "A new physical temporal bone and middle ear model with complete ossicular chain for simulating surgical procedures", 2015 IEEE INTERNATIONAL CONFERENCE ON ROBOTICS AND BIOMIMETICS (ROBIO), IEEE, 6 December 2015 (2015-12-06), pages 1654 - 1659, XP032873340, DOI: 10.1109/ROBIO.2015.7419009

## Beschreibung

Die Erfindung betrifft ein Trainingssystem zur Durchführung von chirurgischen Eingriffen an einem mechanischen Modellobjekt mit einem anatomischen Präparat oder einer Simulationseinheit zur Darstellung von Teilen des menschlichen Körpers, umfassend mindestens einen ersten Funktionsabschnitt, der einen Bereich des humanen Knochensystems abbildet, sowie einen zweiten Funktionsabschnitt, der einen Bereich des humanen Weichteilsystems nachstellt, und mit einer Detektionsvorrichtung zur Messung von ausgewählten, zeitlich veränderlichen Parametern des Präparats oder der Simulationseinheit während eines chirurgischen Trainingseingriffs, wobei die Detektionsvorrichtung mindestens eine in das anatomische Präparat oder in die Simulationseinheit eingearbeitete, in sich abgeschlossene Kavität umfasst, welche während eines chirurgischen Trainingseingriffs mit einem Fluid gefüllt ist, wobei das Fluid in den Kavitäten ein Gas oder Gasgemisch ist, wobei eine Pumpeinrichtung vorhanden ist, die während des Betriebs des Trainingssystems durch in die Kavitäten führende Gaszuleitungen das Gas oder Gasgemisch in den Kavitäten permanent auf einem gegenüber dem Umgebungsdruck p_{U} höheren Überdruck p_{Ü} hält, wobei die Detektionsvorrichtung für jede der Kavitäten einen eigenen Drucksensor enthält, welcher jeweils einer der Kavitäten zugeordnet ist und den jeweiligen aktuellen Innendruck p_{I} in dieser Kavität permanent misst, und wobei das Trainingssystem ein Rückkopplungsmodul umfasst, welches die mit den Drucksensoren gemessenen aktuellen Druck-Daten der Kavitäten aufnimmt, permanent ermittelt, ob die Bedingung p_{Ü} > p_{U} für jede der Kavitäten erfüllt ist und bei etwaiger Messung eines Druckabfalls in einer Kavität, insbesondere verursacht durch eine mechanische Verletzung derselben, diese Information dem am Trainingssystem trainierenden Chirurgen in einer für ihn erkennbaren Weise weitergibt.

Ein solches Trainingssystem mit den obigen Merkmalen ist bekannt aus US 2014/0051050 A1 (= Referenz [00]), wo ein Pneumothorax-Simulator beschrieben ist.

Auch die DE 11 2006 003 722 B4 (= Referenz [0]) beschreibt ein Simulationssystem für chirurgische Eingriffe in der Human- und Veterinärmedizin.

Ein ähnliches Trainingssystem, jedoch ohne die Kavität, ist beschrieben in DE 10 2018 118 918 B3 (= Referenz [1]).

### Hintergrund der Erfindung

In vielen Ländern besteht ein signifikant wachsender Bedarf an realistischen Trainingsmöglichkeiten für angehende, aber auch für schon praktizierende Chirurgen, um deren handwerklichen chirurgischen Fertigkeiten auch ohne Übungen an physischen menschlichen Körpern, wie etwa Leichen in der Pathologie oder gar lebende Patienten, zu erlernen und zu vervollkommnen. Chirurgische Trainingsmöglichkeiten an menschlichen Leichen bzw. Leichenteilen sind nämlich nur relativ wenige vorhanden, kostspielig im Betrieb und in manchen Ländern schon wegen ethischer Erwägungen oder entsprechender Gesetzgebung gar nicht zugänglich.

Daher besteht ein hoher Bedarf an Trainingssystemen der eingangs definierten Art, mit denen unter möglichst realistischen Bedingungen spezielle chirurgische Eingriffe geprobt und geübt werden können, ohne dabei auf menschliche Körper zurückgreifen zu müssen, wobei aber dennoch realistisch modellierte Arbeitsumstände wie bei in-vivo-Situationen vorherrschen sollen.

Ziel ist dabei immer die Bereitstellung eines Trainingssystems, das es Chirurgen erlaubt, möglichst viele der typischen Schritte bei einer echten Operation im Modell zu üben und dabei ihre entsprechenden Fähigkeiten zu verbessern.

Dies gilt ganz allgemein für alle Bereiche der chirurgischen Kunst. Insbesondere im speziellen Bereich Otologie verlangt der Wiederaufbau der Gehörknöchelchenkette vom Chirurgen viel Feingefühl und Übung. Typischerweise hat der Berufsanfänger in der Hals-, Nasen und Ohrenheilkunde sehr wenig Erfahrung in Bezug auf mikroskopisches Arbeiten mit grazilen Instrumenten auf sehr engem Raum. Im knöchernen Gehörgang ist die Bewegungsfreiheit zusätzlich eingeschränkt, weshalb die Mittelohrchirurgie oft auch als "Schlüssellochchirurgie" bezeichnet wird. Zum Erlernen dieser Fertigkeiten bedarf es einer präzisen Anleitung und intensiven Begleitung durch die Lehrenden. Idealerweise ist ein klinikeigenes Felsenbeinlabor mit der Möglichkeit an eigenen Präparaten zu arbeiten vorhanden. Jedoch weisen nur wenige Kliniken diese Möglichkeit auf. Daher ist es wichtig, Trainingssysteme der oben beschriebenen Art für angehende und praktizierende Chirurgen als Patienten-Simulatoren zu etablieren und weiterzuentwickeln.

### Spezielle Vorschläge aus der Otologie

In der DE 10 2005 041 942 A1 (= Referenz [2]) ist ein ähnliches Trainingssystem wie in Referenz [1] mit einer Simulationseinheit zur Darstellung von Teilen des menschlichen Körpers beschrieben, die jedoch keinen zweiten Funktionsabschnitt aufweist, der einen Bereich des humanen Weichteilsystems nachstellt. Es sind nur Tympano-Plastiken vorgesehen, aber keine Stapes-Plastiken, kein Knorpelgewebe und eben auch kein Weichteilgewebe. Eine visuelle Darstellung der Übertragungsfunktion nach einer Manipulation am Trainingssystem ist nicht vorgesehen, ebenso keine Verarbeitung der erfassten Daten zur Lehrverbesserung oder zur Lernerfolgskontrolle. Auch enthält die Simulationseinheit keine genaue anatomische Wiedergabe und auch keine Abbildungen von Risikostrukturen.

Ebenfalls ein ähnliches Trainingssystem wie in Referenz [1], allerdings hier mit einem anatomischen Präparat, ist bekannt aus der Publikation von G. Strauß et al., "Evaluation of eines Trainingssystems für die Felsenbeinchirurgie mit opto-elektronischer Detektion", HNO 2009 · 57:999-1009, Springer Medizin Verlag, 20. August 2009 (= Referenz [3]). Auch hier erfolgt keine Abbildung der humanen Knorpel oder der Weichteile. Es sind auch keine Manipulationen durch ein Implantat vorgesehen sowie keine visuelle Darstellung der Übertragungsfunktion nach einer Manipulation am Trainingssystem. Außerdem erfolgt Keine Verarbeitung der erfassten Daten etwa für Zwecke der Lehrverbesserung oder der Lernerfolgskontrolle.

In der Publikation von Shawn B. Mathews et al., "Incus and Stapes Footplate Simulator", Laryngoscope 107: December 1997, 1614-1616 (= Referenz [4]) ist ein Simulator für Incus und Stapes-Fußplatte beschrieben, mit welchem eine Übungsmöglichkeit zur Verbesserung der otologisch-chirurgischen Fähigkeiten angeboten werden soll. Der dortige Simulator entspricht jedoch nicht den anatomischen Gegebenheiten. Zudem sind die Sichtparameter nicht getreu wiedergegeben, eine Wiedergabe der Übertragungsfunktion ist nicht vorgesehen und auch keine Abbildung von Risikostrukturen.

Ebenso verhält es sich mit der Publikation von A. O. Owa et al., "A middle-ear simulator for practicing prosthesies placement for otosclerosis surgery using ward-based materials", The Journal of Laryngology & Otology, June 2003, Vol. 117, pp. 490-492 (=Referenz [5]), die einen Mittelohr-Simulator zum Trainieren der Implantation von Mittelohrprothesen beschreibt.

Das gleiche gilt auch für die Publikation von Robert Mills et al., "Surgical skills training in middle-ear surgery", The Journal of Laryngology & Otology, March 2003, Vol. 117, pp. 159-163 (=Referenz [6]), die einen Überblick über otologisch-chirurgische Trainingsmöglichkeiten im Jahre 2002 gibt. Es handelt sich bei den beschriebenen Anordnungen um Simulatoren rein für anatomische Lehrzwecke. Eine Wiedergabe der Übertragungsfunktion ist auch hier nicht vorgesehen und ebenso keine Abbildung von Risikostrukturen.

Evan A. Longfield et al. beschreiben im Artikel "3D Printed Pediatric Temporal Bone: A Novel Training Model", Otology & Neurotology, 2015, 36:793-795 (=Referenz [7]) ein mit 3D-Drucker hergestelltes pädriatrisches Trainingsmodell mit einem kindlichen Schläfenknochen. Dieses umfasst allerdings lediglich eine Abbildung des knöchernen Teils des Felsenbeins. Etwaige Manipulationen durch ein Implantat sind nicht vorgesehen, ebenso keine visuelle Darstellung der Übertragungsfunktion nach einer Manipulation. Es erfolgt keine Verarbeitung der erfassten Daten, etwa zu Zwecken der Lehrverbesserung oder der Lernerfolgskontrolle. Auch ist keine Abbildung der Knorpel sowie der Weichteile vorgesehen und kein Feed-Back System bei Verletzung der Risikostrukturen vorhanden.

Die Autoren Konrad Entsfellner et al. beschreiben in ihrer Publikation "A new physical temporal bone and middle ear model with complete ossicular chain for simulating surgical procedures", Proceedings of the 2015 IEEE Conference of Robotics and Biomimetics, Zhuhai, China, pp. 1654-1659 (=Referenz [8]) ein Modell für das Schläfenbein und die komplette Gehörknöchelchenkette zum Simulieren von chirurgischen Verfahren. Auch hier sind keine Manipulationen durch ein Implantat vorgesehen, ebenso keine visuelle Darstellung der Übertragungsfunktion nach einer Manipulation. Es erfolgt keine Verarbeitung der erfassten Daten, etwa zu Zwecken der Lehrverbesserung oder der Lernerfolgskontrolle. Auch ist keine Abbildung der Knorpel sowie der Weichteile vorgesehen und kein Feed-Back System bei Verletzung der Risikostrukturen vorhanden.

Aus dem Artikel Matthew M. Dedmon et al. beschreiben in ihrem Artikel "Development and Validation of a Modular Endoscopic Ear Surgery Skills Trainer", Otology & Neurotology, 2017, 38:1193-1197 (=Referenz [9]) ist ein Trainingssystem für modulare endoskopische Ohr-Chirurgie bekannt, das jedoch keine wirklich enge Übereinstimmung mit den tatsächlichen anatomischen Gegebenheiten aufweist. Außerdem sind auch hier keine Manipulationen durch ein Implantat vorgesehen, ebenso keine visuelle Darstellung der Übertragungsfunktion nach einer Manipulation. Es erfolgt keine Verarbeitung der erfassten Daten, etwa zu Zwecken der Lehrverbesserung oder der Lernerfolgskontrolle. Auch ist keine Abbildung der Knorpel sowie der Weichteile vorgesehen und kein Feed-Back System bei Verletzung der Risikostrukturen vorhanden.

Yann Nguyen et al. beschreiben im Artikel "Modifications to a 3D-printed temporal bone model for augmented stapes fixation surgery teaching", Eur Arch Otorhinolaryngol, 2017, 274:2733-2739 (=Referenz [10]) anhand von Modifikationen an einem 3D-gedruckten Schläfenbeinmodell Lernmöglichkeiten zur Verbesserung der Stapes-Fixierung. Insbesondere ist hier ein Kraftsensor am Stapes vorgesehen.

T. Beleites et al. geben in der Publikation "Von der Rekonstruktion zur Funktion; Tympanoplastik-Training mit Real-Time Feedback", HNO 7, 2021, 69:556-561 (=Referenz [11]) einen Überblick über ein risikofreies Tympanoplastik-Training mit Echtzeit-Rückkopplung.

Jan Christoffer Luers et al. beschreiben in ihrem Fachbuch-Artikel "Surgical anatomy and pathology of the middle ear", J. Anat. (2016) 228, pp338-353 (=Referenz [12]) allgemein den Stand der MittelohrChirurgie im Jahre 2015.

Das in der bereits eingangs genannten Referenz [1] beschriebene Trainingssystem beschreibt zwar einige der Merkmalskomplexe der generischen Simulationseinheit, kann jedoch prinzipiell keine Implantation abbilden und gibt insbesondere an den trainierenden Chirurgen keine spezifischen Hinweise über konkrete Verletzungen von Risikostrukturen während eines Übungseingriffs.

Die ebenfalls bereits eingangs genannte Referenz [0] beschreibt ein Trainings-system mit einem Großteil der eingangs definierten Merkmalskomplexe. Insbesondere umfasst hier die Detektionsvorrichtung in das anatomische Präparat oder in die Simulationseinheit eingearbeitete, in sich abgeschlossene Kavitäten, welche während eines chirurgischen Trainingseingriffs mit einer Flüssigkeit gefüllt und so ausgebildet sind, dass sie bei einer Verletzung einer Kavität durch den trainierenden Chirurgen in einer für diesen sichtbaren Weise ausläuft.

Die ebenfalls eingangs zitierte Referenz [00] schließlich beschreibt ein Trainingssystem mit sämtlichen eingangs definierten Merkmalen, und zwar für ein chirurgisches Training einer Lungenbehandlung.

### Aufgabe der Erfindung

Der vorliegenden Erfindung liegt demgegenüber die Aufgabe zugrunde, ein gattungsgemäßes chirurgisches Trainingssystem der eingangs beschriebenen Art mit möglichst einfachen technischen Mitteln unaufwändig und kostengünstig dahingehend zu verbessern, dass die oben geschilderten Nachteile und Unzulänglichkeiten bekannter Vorrichtungen zumindest größtenteils vermieden werden. Mit der Erfindung soll ein Trainings-Simulator vorgestellt werden, der einerseits dem trainierenden Chirurgen eine sichtbare Rückkopplung bei Operationsfehlern bietet, vor allem an kritischen Punkten in der Risikostruktur, und der andererseits dennoch preisgünstig, kompakt und leicht transportierbar ist. Des Weiteren soll bei einer Verletzung einer Kavität in der Simulationseinheit keine Flüssigkeit auslaufen können und womöglich Kurzschlüsse erzeugen oder anderweitige Beschädigungen von Bauteilen des Systems verursachen, aber dennoch soll dem trainierenden Chirurgen eine erkennbare Rückkopplung bei Operationsfehlern gegeben werden.

Insbesondere soll aber mit der Erfindung ein Trainingssystem vorgestellt werden, mit welchem das Training eines chirurgischen Eingriffs am menschlichen Ohr besser überwacht werden kann.

### Kurze Beschreibung der Erfindung

Diese Aufgabe wird, ausgehend von den eingangs sowie im Oberbegriff des Anspruchs 1 angegebenen Merkmalen, erfindungsgemäß auf ebenso überraschend einfache wie wirkungsvolle und kostengünstig zu realisierende Weise dadurch gelöst, dass die Detektionsvorrichtung weitere Sensoren, insbesondere Druck-Sensoren, aufweist, welche während eines chirurgischen Trainingseingriffs mit dem Trainingssystem den aktuellen Krafteintrag auf nachgestellte Mittelohr-Strukturen, sowie den Versorgungserfolg mit aktiven oder passiven Mittelohrimplantaten in Form von Übertragungsfunktionen und die richtige Installation z.B. einer Hörversorgungs-Einheit durch den trainierenden Chirurgen in Echtzeit überwachen und entsprechende elektrische Signale an das Rückkopplungsmodul übertragen, welches diese in optische oder akustische Information umwandelt und an den trainierenden Chirurgen weitergibt.

Die Verletzung einer der Kavitäten und in der Folge ein Druckabfall in der verletzten Kavität kommt einer simulierten Verletzung eines «echten» lebenden Patienten bei einer realen Operation gleich. Daher sind diese mit einem unter gegenüber dem Umgebungsdruck p_{U} höheren Überdruck p_{Ü} stehenden gefüllten Kavitäten im erfindungsgemäßen Trainingssystem essentiell wichtig für das anatomische Lernen Modell und ermöglichen ein unmittelbares Feedback für den trainierenden Chirurgen.

Dabei erzeugt eine Pumpeinrichtung einen Überdruck (beispielsweise durch Ansaugen der Umgebungsluft) in den Kavitäten. Werden die Risikostrukturen (simuliert durch die Gas-gefüllten Kavitäten) bei der Manipulation des Simulators verletzt, etwa durch Bohren oder Fräsen, kommt es zu einem Druckabfall in der verletzten Kavität. Dieser Druckabfall wird durch einen Drucksensor erfasst und eine entsprechende Meldung bezüglich der aktuell verletzten Kavität durch das Rückkopplungsmodul über eine geeignete Ausgabeeinheit als Feedback an den trainierenden Chirurgen weitergereicht.

Sobald also eine mit Überdruck p_{Ü} beaufschlagte Kavität während des Trainings verletzt wird, schlägt der Drucksensor Alarm.

Die eingesetzten Pumpen werden in der Regel so ausgewählt sein, dass sie sehr leise und erschütterungsarm arbeiten, um den Anwender der erfindungsgemäßen Vorrichtung nicht unnötig zu irritieren.

Einer der entscheidenden Vorteile bei der erfindungsgemäßen Lösung besteht darin, dass keine Flüssigkeiten im Simulator vorgesehen sind und es daher auch nicht durch ein Auslaufen dieser Flüssigkeiten zu elektrischen Kurzschlüssen sowie Beschädigungen von Bauteilen kommen kann.

Der bei einer Verletzung einer Kavität gemessene Druckverlust Δp_{Ü} kann je nach tatsächlichem Umfang der Verletzung höher oder geringer ausfallen. Daher lässt der gemessene Druckverlust Δp_{Ü} direkt und ohne den Einsatz komplexer und Fehler-anfälliger zusätzlicher lichtleitender und/oder elektrischer Strukturen eine Schlussfolgerung auf den Verletzungsgrad der verletzten Risiko-Struktur zu. Dies ist insbesondere gegenüber dem Stand der Technik nach Referenz [0] ein großer Vorteil im Gegensatz zu einer Überwachung durch elektrisch leitende, auslaufende Flüssigkeit, welche *per se* und ohne weitere aufwändige Hilfsmittel ja lediglich anzeigen kann, DASS eine Verletzung einer Kavität vorliegt, nicht jedoch in welcher Größenordnung.

Ein weiterer Vorteil an dem erfindungsgemäß angewandten Überdruckprinzip besteht darin, dass die Pumpeinrichtung keine zusätzliche Filtereinheit benötigt, da Wasser oder Partikel nicht in die Pumpeinrichtung gelangen können. Bei einer Verletzung einer Kavität pumpt die Pumpe einfach weiter pumpt und so bleibt ein -wenngleich etwas geringerer- Überdruck in der verletzten Kavität bestehen. Irgendwelche Verunreinigungen, wie bei einem Einsatz von Flüssigkeit, müssen hier nicht befürchtet oder verhindert werden.

Durch diesen neuartigen Aufbau mit Gas-gefüllten, unter Überdruck stehenden Kavitäten und die damit vorgegebene Funktionsweise des erfindungsgemäßen Trainingssystems kann sichergestellt werden, dass die zu trainierende OP-Technik zumindest hinsichtlich der RisikoStrukturen anatomisch korrekt und realistisch abgebildet wird. Eventuelle technische Fehler des trainierenden Chirurgen können bei der Verletzung einer Risiko-Struktur während des Übungseingriffs dem Trainierenden unmittelbar deutlich gemacht werden. Dadurch erlernt der trainierende Chirurg praxisnah die bei einer Operation erforderlichen handwerklichen Fertigkeiten und das Risiko einer ernsthaften Verletzung bei einer späteren echten Operation am lebenden Patienten kann damit entscheidend gesenkt werden.

Der erfindungsgemäße Patienten-Simulator entspricht exakten anatomischen Voraussetzungen an Knochengewebe, Weichteilen und Sehnen. Mit Gas unter Überdruck gefüllte Simulationsmodule für Gefäße sowie Nervenstränge geben dem Chirurgen ein Real-Life Gefühl und helfen dabei, in der späteren Praxis weniger Fehler und dadurch ein höheres Patientenwohl zu erzielen. Gerade für unerfahrene Arzte bildet der Simulator eine sehr gute und vor allem risikofreie Einarbeitungs-Möglichkeit.

Weitere besondere Vorteile der erfindungsgemäßen Vorrichtung gegenüber dem Stand der Technik sind unter anderem:

### Einfachheit der Bedienung:

Das erfindungsgemäße Trainingssystem verfügt auch über ein Rückkopplungsmodul, welches eventuell auftretende Operationsfehler des trainierenden Chirurgen beim Übungseingriff anzeigt.

### Präzision:

Die Herstellung des Trainingssystems, etwa mittels 3D-Druckverfahren aufgrund von CT-Daten für 3D Druck, ermöglicht eine sehr präzise und anatomisch korrekte Nachbildung der tatsächlichen Gegebenheiten bei "echten" Operationen. Modelle mit Sensoren können in Hinblick auf die zu trainierende chirurgische Behandlung bestimmter physiologischer und anatomischer Erkrankungen gezielt angefertigt werden, beispielsweise spezielle Rechts/Links-Modelle oder etwa pädiatrische Schlafenbeinmodelle.

Alle Modell-Strukturen im erfindungsgemäßen Trainingssystem sind auch bezüglich ihrer Oberflächen realistisch abgebildet:
1. feucht
2. trocken
3. adhäsiv (etwa Implantate)
4. korrekte Shore-Härte
5. realistische Farbe(n)

Dadurch können qualitative und reproduzierbare Szenarien real vorkommender Operationssituationen und angewendeter Operationstechniken am lebenden (oder am auch toten) Patienten ziemlich exakt und beliebig quantitativ originalgetreu nachgestellt werden.

### Sicherheit:

Mit dem erfindungsgemäßen Trainingssystem wird übungsweise stets außerhalb einer "echten" OP am lebenden oder toten Patienten trainiert. Insbesondere wird damit die Gefahr von Kontaminationen bzw. dem Übertragen von Krankheitserregern, etwa von menschlichen Präparaten auf den Chirurgen, sicher vermieden.

Der Maßstab zwischen der realen Patienten-Anatomie und dem erfindungsgemäßen Trainings-Simulator wird in der Regel 1:1 betragen.

### Bevorzugte Ausführungsformen der Erfindung

Vorteilhaft ist sind Ausführungsformen des erfindungsgemäßen Trainingssystems, bei denen das Gas in den Kavitäten trocken und nicht-korrosiv ist, insbesondere Luft, die vorzugsweise aus der Umgebung des Trainingssystems mit Hilfe der Pumpeinrichtung entnommen werden kann.

Damit wird ein korrosiver Angriff auf Teile der Simulationseinheit wirksam verhindert. Am einfachsten und kostengünstigsten ist die Entnahme von schlichter Umgebungsluft. Diese kann aber auch, etwa mittels Hindurchleiten durch einen geeigneten Filter oder Exsikkator, vor ihrem Einsatz getrocknet werden.

Auf jeden Fall sollte das verwendete Gas oder Gasgemisch ausschließlich physiologisch ungefährliche, insbesondere ungiftige Substanzen enthalten. Auf diese Weise wird das Risiko einer Verletzung und/oder gar einer Vergiftung des trainierenden Chirurgen minimiert.

Ganz besonders bevorzugt sind Ausführungsformen der Erfindung, die sich dadurch auszeichnen, dass die Pumpeinrichtung so eingerichtet ist, dass sie den Überdruck p_{Ü} in den Kavitäten während des Betriebs konstant hält, zumindest solange keine mechanische Verletzung einer Kavität vorliegt.

Auf diese Weise werden gleichbleibende Bedingungen im Betrieb, insbesondere in Zusammenhang mit der Detektion von Kavitäts-Verletzungen, sichergestellt.

Vorzugsweise wird der Überdruck p_{Ü} in den Kavitäten (13) zwischen 100hPa und 500hPa, insbesondere bei etwa 300hPa, über dem Umgebungsdruck p_{U} liegen.

Einerseits muss die verwendete Pumpeinrichtung für die Erzeugung eines Überdrucks p_{Ü} in diesem Bereich nicht sonderlich stark ausgelegt sein, sodass schon kostengünstige kleinere und vor allem kompaktere Pumpen für diesen Zweck ausgewählt werden können. Andererseits reicht dieser "relativ leichte" Überdruck aber bereits für einen sicheren Betrieb des Trainingssystems mit zuverlässiger Indikation von Kavitäts-Verletzungen in der Regel bereits aus.

Ganz besonders bevorzugt sind Ausführungsformen des erfindungsgemäßen Trainingssystems, bei denen die Pumpeinrichtung eine oder mehrere Pumpen mit variabel einstellbarer Fördermenge umfasst. Damit wird ein wichtiger Parameter zur Einstellung der optimalen Betriebsbedingungen der Vorrichtung bereitgestellt. Insbesondere erleichtert die variabel einstellbare Fördermenge die Detektion der Leckage bei einer Verletzung einer Kavität oder ermöglicht diese sogar erst.

Vorteilhaft ist auch eine Klasse von Ausführungsformen der Erfindung, welche sich dadurch auszeichnen, dass die Pumpeinrichtung eine oder mehrere erschütterungsarme Mikropumpen, insbesondere miniaturisierte Doppelmembranpumpen, umfasst.

Die Mikropumpen sorgen für den Überdruck p_{Ü} in den Kavitäten und stellen einen fest definierten Druck in den Kavitäten ein. Die Mikropumpen sind in der Regel als miniaturisierte DoppelmembranPumpen ausgelegt.

Bei bevorzugten Weiterbildungen dieser Klasse von Ausführungsformen sind die Doppelmembranpumpen mit jeweils zwei Piezo-Aktoren betreibbar.

Diese Piezo-Aktoren sind besonders platz- und energiesparend.

In vorteilhaften Ausführungsformen des erfindungsgemäßen Trainingssystems sind die Drucksensoren temperatur-kompensiert.

Damit kann ein gleichmäßiger Betrieb der Vorrichtung auch bei schwankenden Umgebungseinflüssen sichergestellt werden.

Vorzugsweise sind die Sensoren über einen Temperaturbereich von 0 °C bis 50 °C kalibriert.

Diese Sensoren messen erfindungsgemäß den Überdruck p_{Ü} in den Kavitäten und decken dabei einen Bereich von bis zu 15psi mit einem Gesamtfehlerband von ±1,5 %FSS ab.

Ebenfalls bevorzugt ist eine Klasse von Ausführungsformen der Erfindung, bei welchen die eingesetzten Drucksensoren einen oder mehrere piezo-resistive Sensoren, vorzugsweise miniaturisierte Silizium-Drucksensoren, umfassen.

Durch den Einsatz von integrierten Mikro-Sensoren lässt sich die Leistungsfähigkeit der Simulationseinheit und des Pumpensystems erweitern. Es handelt sich hierbei vorzugsweise um piezo-resistive Silizium-Drucksensoren. Mit einer typischen Ausdehnung von lediglich 8mm×7mm sind diese Mikro-Sensoren verhältnismäßig klein und kompakt, was sich auch günstig auf die Gesamtgröße der erfindungsgemäßen Vorrichtung auswirkt.

Bei besonders bevorzugten Weiterbildungen dieser Klasse von Ausführungsformen sind die Drucksensoren einen anwendungsspezifischen integrierten Schaltkreis (="ASIC") enthalten, der die Drucksensoren vorzugsweise auf Sensor-Offset, Empfindlichkeit, Genauigkeit und/oder Temperatureinflüsse kalibriert.

Mit Hilfe des ASIC können die Drucksensoren auf Sensor-Offset, Empfindlichkeit, Temperatureffekte und Genauigkeit kalibriert und temperaturkompensiert werden. Kalibrierte Ausgangswerte für den Druck werden in der Regel bei etwa 1kHz für analoge und bei 2kHz für digitale Anwendungen aktualisiert. Ein ASIC kann problemlos in Kontakt mit trockenen und nicht-korrosiven Gasen verwendet werden.

Weitere vorteilhafte Ausführungsformen der Erfindung zeichnen sich dadurch aus, dass die Gaszuleitungen einen oder mehrere, vorzugsweise optisch transparente, Silikon-Schläuche umfassen, insbesondere Tygon-Schläuche mit Wandstärken und Innendurchmessern in der Größenordnung von jeweils 1mm.

Damit passen die Gaszuleitungen perfekt zu den oben beschriebenen Mikropumpen.

Das bevorzugt verwendete Schlauchmaterial ist für den Einsatz im medizinisch-technischen Bereich sowie im Lebensmittel- und Trinkwasserbereich geeignet. Es kann sowohl für Flüssigkeiten als auch für Gase eingesetzt werden. Das Schlauchmaterial bietet als besondere Eigenschaft eine dauerhafte Temperaturbeständigkeit bis +200°C. Darüber hinaus ist Silikonschlauch sehr beständig gegen Witterungseinflüsse (z. B. Ozon oder UV-Licht) und unempfindlich gegenüber Feuchtigkeit oder der damit verbundenen Oxidation. Schließlich verfügt er über eine Zugfestigkeit von 11N/mm².

Der zweite Funktionsabschnitt des anatomischen Präparats oder der Simulationseinheit kann zusätzlich einen Unter-Funktionsabschnitt aufweisen, der einen Bereich des humanen Nervensystems und/oder des humanen Sehnensystems und/oder des humanen Blutgefäßsystems und/oder typische pathologische Erkrankungen nachstellt, welche die Grundlage für das mit dem Trainingssystem mögliche patientenlose Training zur Durchführung von chirurgischen Eingriffen bilden.

Von besonders großem praktischen Vorteil sind Varianten, bei welchen zumindest einige der Kavitäten einen Teil des Unter-Funktionsabschnitts bilden, der einen Bereich des humanen Weichteilsystems nachstellt, wobei der Unter-Funktionsabschnitt in den ersten Funktionsabschnitt, der einen Bereich des humanen Knochensystems abbildet, eingearbeitet ist, und dass diese Kavitäten geometrisch so ausgebildet sind, dass sie bestimmte Risikostrukturen des humanen Weichteilsystems realistisch nachbilden, insbesondere den sinus sigmoideus (venöser Blutleiter im Gehirn) und/oder den nervus facialis (Gesichtsnerv) und/oder die arteria carotis interna (Teil der Blutversorgungsleitung des Gehirns) und/oder die dura (äußerste Hirnhaut) und/oder den Labyrinthblock und/oder die Ossikel (Gehörknöchelchenkette).

Spezielle Weiterbildungen dieser Varianten sind dadurch gekennzeichnet, dass eine der Kavitäten im Unter-Funktionsabschnitt den sinus sigmoideus in Form eines S-förmigen, in sich geschlossenen Schlauchs nachbildet, welcher einen Innendurchmesser zwischen 1mm und 5mm, vorzugsweise etwa 3mm, sowie einen Außendurchmesser zwischen 2mm und 8mm, vorzugsweise etwa 6mm, aufweist und entlang eines Bereichs im ersten Funktionsabschnitt angeordnet ist, welcher die hintere Kante der menschlichen Felsenbeinpyramide nachbildet.

Dazu alternative oder aber auch ergänzende Varianten zeichnen sich dadurch aus, dass eine der Kavitäten im Unter-Funktionsabschnitt den nervus facialis in Form eines bogenförmigen, in sich geschlossenen Schlauchs nachbildet, welcher einen Innendurchmesser zwischen 1mm und 3mm, vorzugsweise etwa 1,5mm, sowie einen Außendurchmesser zwischen 3mm und 7mm, vorzugsweise etwa 5mm, aufweist und entlang eines Bereichs im ersten Funktionsabschnitt angeordnet ist, welcher den *porus acusticus internus* des menschlichen Felsenbeins nachbildet.

Bei einer weiteren Variante bildet eine der Kavitäten im Unter-Funktionsabschnitt die dura in Form eines gebogenen, flachen, in sich geschlossenen Hohlraums nach, welcher eine Mantelfläche zwischen 7mm und 13mm, vorzugsweise etwa 10mm, sowie einen Außendurchmesser zwischen 3mm und 7mm, vorzugsweise etwa 5mm, aufweist und um einen Bereichs im ersten Funktionsabschnitt angeordnet ist, welcher das menschliche Mittelohr und das Innenohr nachbildet.

Besonders bevorzugt sind auch Ausführungsformen des erfindungsgemäßen Trainingssystems, die sich dadurch auszeichnen, dass das anatomische Präparat oder die Simulationseinheit einen dritten Funktionsabschnitt aufweist, der einen Bereich des humanen Knorpelsystems nachbildet, insbesondere einen Teil des menschlichen Ohrs.

Im Stand der Technik ist bisher kein Simulator-System beschrieben, das sowohl Knochen- und Weichteilgewebe als auch Knorpel abbildet. Dies ist aber insbesondere für Anwendungen in der Otologie ganz besonders wichtig, weil hier während einer realen Operation sowohl Knochen als auch Knorpel als auch Gefäße, Nerven und andere Weichteile behandelt werden müssen.

Die Gehörknöchelchenkette ist beweglich und es können verschiedene Mittelohroperationen und Implantationen durchgeführt werden:
- Implantation von aktiven Mittelohr-Hörgeräten
- Tympanoplastik (nach Wullstein Typ 1 - 5)
- Stapesplastik
- Trommelfell Rekonstruktionen
- Setzen von Paukenröhrchen

Alle diese und noch viele weitere chirurgischen Eingriffe können am erfindungsgemäßen Trainingssystem ideal geplant und durchgeführt werden. Durch den dabei ermöglichten Echtzeit-Feedback während des Trainings-Eingriffs kann der Behandlungserfolg (bzw. Misserfolg) des trainierenden Chirurgen problemlos visualisiert, aufgenommen und sogar zu Lehrzwecken im Nachhinein präsentiert werden.

Ergonomisch besonders günstig ist eine Ausgestaltung der Erfindung, bei welcher die in den Funktionsabschnitten sowie gegebenenfalls in einem Unter-Funktionsabschnitt verwendeten Materialien im Wesentlichen dieselben haptischen Eigenschaften aufweisen, wie die humanen Vorbilder, insbesondere beim Fräsen von Knochen oder beim Schneiden und Zunähen von Weichteilen.

Beispielsweise können Teile von Knochenmodellen, etwa die Gehörknöchelchen, mit Silikon, vorzugsweise mit Silikon-Kautschuk der Shore-Härte 40 A, überzogen werden. Ein Modell der Stapedius-Sehne (musculus stapedius) kann aus Silikon bestehen. Ein Trommelfell-Modell kann beispielsweise durch Silikon-Kautschuk der Shore-Härte 20 A und in einer Dicke von ca. 0,1mm hergestellt werden, das ovale Fenster mit einer Shore-Härte von 10 A und ebenfalls ca. 0,1mm dick.

Die mediale Wand des Mittelohrs sowie die Gehörknöchelchen sind mit einer transparenten, klebrigen und hydrophilen Schicht benetzt. Dieses bildet die im menschlichen Felsenbein vorherrschenden natürlichen Adhäsionskräfte ab.

Grundsätzlich ist die Abbildung verschiedener und völlig unterschiedlicher Krankheitsbilder und Altersklassen möglich.

Ganz besonders bevorzugt ist auch Klasse von Ausführungsformen des erfindungsgemäßen Trainingssystems, die sich dadurch auszeichnen, dass das Trainingssystem ein Rückkopplungsmodul umfasst, welches weitere von der Detektionsvorrichtung gemessene Parameter-Daten aufnehmen und mittels eines Expertensystems und/oder künstlicher Intelligenz bewerten und dem Chirurgen während eines chirurgischen Trainingseingriffs auf den gemessenen Parameter-Daten basierende Informationen zur Verbesserung des aktuellen Eingriffs übermitteln kann.

Das Rückkopplungsmodul erkennt somit mechanische Verletzungen der Kavitäten durch Druckverlust an den jeweiligen Ventilen und signalisiert dem trainierenden Arzt, welche Risikostruktur betroffen ist. Aufgrund der Größe des gemessenen Druckverlustes ist das Ausmaß einer Verletzung von Risikostrukturen erkennbar. Die Klassifizierung unterscheidet dabei zwischen leichter Verletzung, moderater Beschädigung und total zerstörte Risikostruktur.

Individuelle Erfolge und Misserfolge des trainierenden Chirurgen während des Übungseingriffs können so erfasst und unmittelbar über eine Verarbeitungs- und Anzeigeeinheit mitgeteilt, insbesondere aber auch gespeichert werden und in gezielte Verbesserungsempfehlungen für zukünftige Operationen münden.

In den Rahmen der vorliegenden Erfindung fällt auch ein Verfahren zur Herstellung eines Trainingssystems der oben beschriebenen erfindungsgemäßen Art, welches sich dadurch auszeichnet, dass die Kavitäten der Detektionsvorrichtung mittels eines 3D-Druckverfahrens hohl und röhrenförmig, vorzugsweise auf der Grundlage von hochauflösenden CT-Datensätzen von Originalen der nachzubildenden Bereiche des menschlichen Körpers, hergestellt werden, wobei die Kavitäten in einem Arbeitsgang mit dem ersten Funktionsabschnitt gedruckt werden, der einen Bereich des humanen Knochensystems abbildet.

Die erfindungsgemäßen Simulatoren sollen (auch nach der Manipulation) CT-taugliche Bilder liefern können, um eine objektive Kontrolle der Ergebnisse sicherzustellen. Verschiedene Materialien mit gleicher Referenz (z.B. ein Implantat oder ein anderer Gegenstand, der im CT-Bild sichtbar wird) werden dazu im CT geprüft.

Die Simulatoren sollen möglichst keine oder nur wenig Handarbeit bei der Herstellung abverlangen und in einzelne, leicht zusammenführbare Module getrennt und zusammengesteckt werden können. Da die Komponenten gut trennbar sein müssen, werden sie am besten nicht mit Kleber verbunden oder gar verschweißt.

Modelle für Gehörknöchelchen werden z.B. 20% kleiner gedruckt und anschließend mit einer Silikonschicht überzogen und miteinander verbunden.

In den Rahmen der vorliegenden Erfindung fällt schließlich auch ein Verfahren zum Betrieb eines Trainingssystems der oben beschriebenen erfindungsgemäßen Art während eines chirurgischen Trainingseingriffs am Trainingssystem, welches sich durch folgende Schritte auszeichnet:
- Ein trainierender Chirurg nimmt einen chirurgischen Trainingseingriff am mechanischen Modellobjekt des Trainingssystems mit der Simulationseinheit zur Darstellung von Teilen des menschlichen Körpers mittels eines invasiven chirurgischen Instruments vor, insbesondere mittels eines Skalpells, eines Bohrers oder einer Fräse.
- Bei einer Verletzung einer (insbesondere in den einen Bereich des humanen Weichteilsystems nachstellenden zweiten Funktionsabschnitt eingearbeiteten) Kavität durch den trainierenden Chirurgen während des chirurgischen Trainingseingriffs misst der dieser Kavität zugeordnet Drucksensor einen dadurch versachten Druckabfall in dieser Kavität und meldet ihn dem Rückkopplungsmodul.
- Das Rückkopplungsmodul teilt dem Chirurgen mit, dass die Bedingung p_{Ü} > p_{U} nicht mehr für jede der Kavitäten erfüllt und insbesondere welche Kavität davon betroffen ist.

Bei speziellen Varianten der Erfindung wird mit dem chirurgischen Trainingseingriff mittels des verwendeten invasiven chirurgischen Instruments ein spezifisches chirurgisches Verfahren der Otologie trainiert, insbesondere eine endaurale oder eine retroaurikuläre Eröffnung, das Einsetzen aktiver Mittelohrimplantate sowie passiver Implantate, wie beispielsweise einer Tympanoplastik, einer Myringoplastik, einer Stapesplastik, eine Stapedektomie, eine Stapedotomie und/oder einer Behebung pathologischer Erkrankungen, beispielsweise Cholesteatom-Entfernung.

Der chirurgische Trainingseingriff kann Roboter-assistiert durch Fachpersonal trainiert beziehungsweise validiert werden.

Bei weiteren speziellen Varianten der Erfindung wird mit dem chirurgischen Trainingseingriff mittels der Sensoren die versorgte Hörübertragung visualisiert. Durch die gemessenen Signalamplituden sowie den Frequenzgängen lassen sich Implantationserfolge sowie Implantationsfehler in Echtzeit darstellen.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

In der schematischen Zeichnung sind Ausführungsbeispiele der Erfindung dargestellt, welche in der nachfolgenden Beschreibung näher erläutert werden.

Im Einzelnen zeigen:
- Fig. 1: eine funktionale Darstellung einer Ausführungsform des erfindungsgemäßen Trainingssystems mit einer Simulationseinheit in räumlicher Schnittansicht, schematischer Kavität mit Drucksensor, schematischer Pumpeinrichtung mit Gaszuleitung zur Kavität, schematischem Rückkopplungsmodul sowie einer schematischen Verarbeitungs- und Anzeigeeinheit;
- Fig. 2a: eine Ausführungsform der erfindungsgemäßen Simulationseinheit in einer Draufsicht von der Seite in Richtung auf die Ohrmuschel;
- Fig. 2b: eine schematische Schnittansicht auf die Ausführungsform von Fig. 2a um ca. 70° nach rechts gedreht;
- Fig. 2c: die Schnittansicht von Fig. 2b, jedoch ohne einen Großteil des ersten Funktionsabschnitts, der einen Bereich des humanen Knochensystems abbildet, so dass der Blick frei wird auf den zweiten Funktionsabschnitt, der einen Bereich des humanen Weichteilsystems nachstellt;
- Fig. 2d: wie Fig. 2a, jedoch um ca. 120° nach rechts gedreht;
- Fig. 3: ein vergrößertes Detail aus Fig. 2b mit einer schematischen Nachbildung des menschlichen Mittelohrs; und
- Fig. 4: eine mögliche Ausführungsform der erfindungsgemäßen Kavitäten im geöffneten Zustand (somit zunächst ohne Druckgas-Füllung).

Die in den Figuren der Zeichnung schematisch, aber zum Teil auch detailliert dargestellten Ausführungsformen des erfindungsgemäßen **Trainingssystems 10** dienen zur Durchführung von chirurgischen Eingriffen an einem mechanischen Modellobjekt mit einem anatomischen Präparat oder einer **Simulationseinheit 11** zur Darstellung von Teilen des menschlichen Körpers. Die Simulationseinheit 11 umfasst mindestens einen **ersten Funktionsabschnitt 12',** der einen Bereich des humanen Knochensystems abbildet, sowie einen **zweiten Funktionsabschnitt 12",** der einen Bereich des humanen Weichteilsystems nachstellt. Außerdem ist eine Detektionsvorrichtung zur Messung von ausgewählten, zeitlich veränderlichen Parametern des Präparats oder der Simulationseinheit 11 während eines chirurgischen Trainingseingriffs vorhanden. Die Detektionsvorrichtung umfasst mindestens eine in das anatomische Präparat oder in die Simulationseinheit 11 eingearbeitete, in sich abgeschlossene **Kavität 13** umfasst, welche während eines chirurgischen Trainingseingriffs mit einem Fluid gefüllt ist.

Das erfindungsgemäße Trainingssystem 10 zeichnet sich dadurch aus, dass das Fluid in den Kavitäten 13 ein Gas oder Gasgemisch ist; dass eine **Pumpeinrichtung 21** vorhanden ist, die während des Betriebs des Trainingssystems 10 durch in die Kavitäten 13 führende **Gaszuleitungen 22** das Gas oder Gasgemisch in den Kavitäten 13 permanent auf einem gegenüber dem Umgebungsdruck p_{U} höheren Überdruck p_{Ü} hält; dass die Detektionsvorrichtung für jede der Kavitäten 13 einen eigenen **Drucksensor 23** enthält, welcher jeweils einer der Kavitäten 13 zugeordnet ist und den jeweiligen aktuellen Innendruck p_{I} in dieser Kavität 13 permanent misst; und dass das Trainingssystem 10 ein **Rückkopplungsmodul 15** umfasst, welches die mit den Drucksensoren 23 gemessenen aktuellen Druck-Daten der Kavitäten 13 aufnimmt, permanent ermittelt, ob die Bedingung p_{Ü} > p_{U} für jede der Kavitäten 13 erfüllt ist und bei etwaiger Messung eines Druckabfalls in einer Kavität 13, insbesondere verursacht durch eine mechanische Verletzung derselben, diese Information dem am Trainingssystem 10 trainierenden Chirurgen in einer für ihn erkennbaren Weise weitergibt.

Die Pumpeinrichtung 21 kann so eingerichtet sein, dass sie den Überdruck p_{Ü} in den Kavitäten 13 während des Betriebs konstant hält, zumindest solange keine mechanische Verletzung einer Kavität 13 vorliegt. Der Überdruck p_{Ü} in den Kavitäten 13 liegt zwischen 100hPa und 500hPa, vorzugsweise etwa 300hPa, über dem Umgebungsdruck p_{U}. Die Pumpeinrichtung 21 kann eine oder mehrere Pumpen mit variabel einstellbarer Fördermenge umfassen. Die Pumpen können als erschütterungsarme Mikropumpen, insbesondere miniaturisierte Doppelmembranpumpen, ausgeführt sein und sind vorzugsweise mit Piezo-Aktoren betreibbar.

Die Drucksensoren 23 sind bevorzugt temperatur-kompensiert und können einen oder mehrere piezo-resistive Sensoren, vorzugsweise miniaturisierte Silizium-Drucksensoren, umfassen. In der Zeichnung nicht eigens dargestellt sind Ausführungsformen, bei welchen die Drucksensoren 23 einen anwendungsspezifischen integrierten Schaltkreis (="ASIC") enthalten, der die Drucksensoren 23 vorzugsweise auf Sensor-Offset, Empfindlichkeit, Genauigkeit und/oder Temperatureinflüsse kalibriert.

Die Gaszuleitungen 22 können einen oder mehrere, vorzugsweise optisch transparente, Silikon-Schläuche umfassen, insbesondere Tygon-Schläuche mit Wandstärken und Innendurchmessern in der Größenordnung von jeweils 1mm.

Das anatomische Präparat oder die Simulationseinheit 11 weist vorzugsweise einen **dritten Funktionsabschnitt 12‴** auf, der einen Bereich des humanen Knorpelsystems nachbildet, insbesondere einen Teil des menschlichen Ohrs.

Die in den Funktionsabschnitten 12'; 12"; 12‴ sowie gegebenenfalls in einem Unter-Funktionsabschnitt verwendeten Materialien weisen im Wesentlichen dieselben haptischen Eigenschaften auf, wie die humanen Vorbilder, insbesondere beim Fräsen von Knochen oder beim Schneiden und Zunähen von Weichteilen.

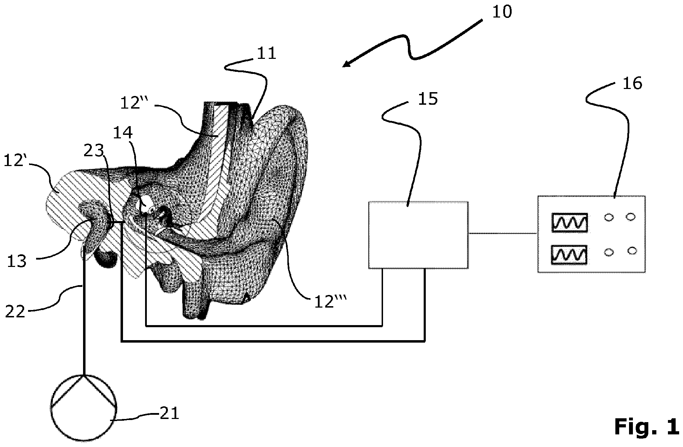

Des Weiteren weist bei der Ausführungsform von **Fig. 1** die Detektionsvorrichtung des Trainingssystems 10 einen **weiteren Sensor 14** auf, der während eines chirurgischen Trainingseingriffs mit dem Trainings-system 10 den aktuellen Krafteintrag auf nachgestellte Mittelohr-Strukturen 17; 17a; 17b; 17c; 17d, sowie den Versorgungserfolg mit aktiven oder passiven Mittelohrimplantaten durch den trainierenden Chirurgen in Echtzeit überwacht und entsprechende elektrische Signale an das Rückkopplungsmodul 15 überträgt, welches diese in optische oder akustische Information umwandelt und an den trainierenden Chirurgen weitergibt.

Wie in Fig. 1 schematisch dargestellt, umfasst das Trainingssystem 10 ein Rückkopplungsmodul 15, welches mit der Detektionsvorrichtung gemessene Parameter-Daten bewertet und dem Chirurgen während eines chirurgischen Trainingseingriffs, insbesondere mittels eines Expertensystems und/oder künstlicher Intelligenz, auf den gemessenen Parameter-Daten basierende Informationen zur Verbesserung des aktuellen Eingriffs übermittelt. Das Rückkopplungsmodul 15 dient zur Aufnahme und Weiterleitung analoger, eventuell auch digitaler elektrischer Signale aus der Detektionsvorrichtung, insbesondere von den Drucksensoren 23, aber auch von den weiteren Sensoren 14, sowie zu deren Filterung und Digitalisierung. Diese Signale werden in optische oder akustische Information umgewandelt und an den trainierenden Chirurgen weitergegeben.

Dazu ist auch noch eine **Verarbeitungs- und Anzeige-Einheit 16** vorgesehen. Diese besorgt die Verarbeitung der analogen und/oder digitalen Informationen und greift gegebenenfalls auf ein Expertensystem und/oder künstliche Intelligenz zurück. Damit werden Fehlerdiagnosen sowie simultane eine Visualisierung der aktuellen Arbeits-Ergebnisse während des chirurgischen Trainings ermöglicht. Vorzugsweise ist auch eine Speichereinheit vorgesehen, um die Lernerfolgskontrolle durch Vergleich-Optionen weiter zu verbessern.

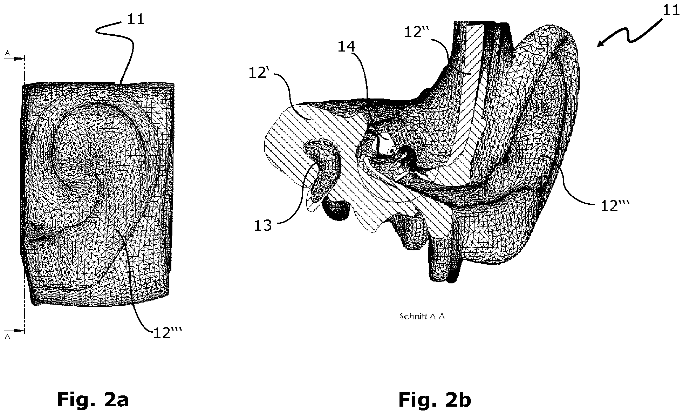

**Fig. 2a** zeigt eine Ausführungsform der erfindungsgemäßen Simulationseinheit 11 in einer Draufsicht von der Seite in Richtung auf eine Ohrmuschel als Bestandteil des dritten Funktionsabschnitts 12‴ zur Nachbildung eines Bereichs des humanen Knorpelsystems.

In **Fig. 2b** ist eine Schnittansicht A-A auf die Ausführungsform von Fig. 2a mit einer Rechtsdrehung um ca. 70° wiedergegeben. Die dargestellte Simulationseinheit 11 entspricht dem linken Abschnitt des Funktions-Schemas des erfindungsgemäßen Trainingssystems nach Fig. 1. Man erkennt deutlich die nachgebildeten Knochen-Strukturen im ersten Funktionsabschnitt 12', die simulierten Weichteil-Strukturen des zweiten Funktionsabschnitts 12" sowie die nachempfundenen Knorpel-Strukturen des dritten Funktionsabschnitts 12‴ mit einem Modell der menschlichen Ohrmuschel. Gut zu erkennen ist auch eine der erfindungsgemäßen, geschlossenen Kavitäten 13 mit einer -in der Zeichnung nicht sichtbaren- Gas-Füllung.

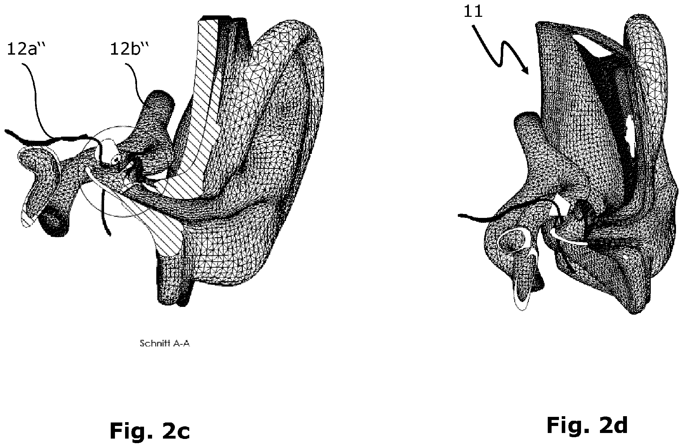

Um einen freien Blick auf den zweiten Funktionsabschnitt 12" zu erlauben, der einen Bereich des humanen Weichteilsystems nachstellt, ist in **Fig. 2c** die Schnittansicht von Fig. 2b ohne einen Großteil des ersten Funktionsabschnitts 12' dargestellt, der einen Bereich des humanen Knochensystems abbildet.

Bei dieser Ausführungsform weist der zweite Funktionsabschnitt 12" der Simulationseinheit 11 einen Unter-Funktionsabschnitt auf, der einen Bereich des humanen Nervensystems sowie des humanen Blutgefäßsystems nachstellt. Gerade ein solcher spezieller Unter-Funktionsabschnitt bildet die Grundlage für das mit dem Trainingssystem 10 mögliche patientenlose Training zur Durchführung von chirurgischen Eingriffen.

Dieser der Unter-Funktionsabschnitt ist in den ersten Funktionsabschnitt 12' eingearbeitet, der einen Bereich des humanen Knochensystems abbildet. Zumindest einige des Unter-Funktionsabschnitts sind als erfindungsgemäße, mit Druckgas gefüllte, geschlossene Kavitäten 13 realisiert. Diese Kavitäten sind geometrisch so ausgebildet sind, dass sie bestimmte Risikostrukturen des humanen Weichteilsystems realistisch nachbilden, im vorliegenden Ausführungsbeispiel insbesondere den ***nervus facialis* 12a"** sowie die ***arteria carotis interna* 12b".** Der *nervus facialis* 12a" ist in Form eines bogenförmigen, in sich geschlossenen Schlauchs nachbildet, welcher einen Innendurchmesser zwischen 1mm und 3mm, vorzugsweise etwa 1,5mm, sowie einen Außendurchmesser zwischen 3mm und 7mm, vorzugsweise etwa 5mm, aufweist und entlang eines Bereichs im ersten Funktionsabschnitt 12' angeordnet ist, welcher den *porus acusticus internus* des menschlichen Felsenbeins nachbildet.

**Fig. 2d** illustriert dieselbe Ausführungsform wie Fig. 2a, jedoch um ca. 120° nach rechts gedreht, sodass die Simulationseinheit 11 -in einer nicht-geschnittenen Darstellung- mit Blickrichtung frontal auf das nachgebildete menschliche Ohr ungefähr parallel zur Ebene der Ohrmuschel zu erkennen ist.

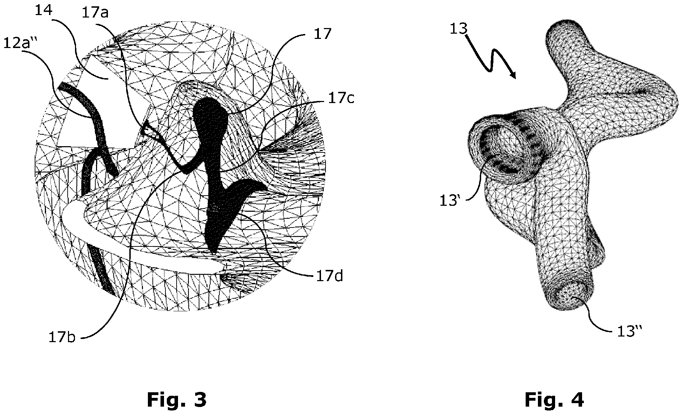

In **Fig. 3** ist ein vergrößertes Detail aus Fig. 2b mit einer schematischen **Nachbildung des menschlichen Mittelohrs 17** dargestellt. Insbesondere enthält dieses Modell als realistisch nachempfundene Bestandteile der menschlichen Gehörknöchelchenkette den **Stapes 17a,** den **Incus 17b,** den **Malleus 17c** sowie das **Trommelfell 17d.**

Dadurch kann der erfindungsgemäß modifizierten Simulationseinheit 11 bei einem chirurgischen Trainingseingriff unter Verwendung eines typischen invasiven chirurgischen Instruments ein spezifisches chirurgisches Verfahren der Otologie trainiert werden, insbesondere eine endaurale oder eine retroaurikuläre Eröffnung, das Einsetzen einer Tympanoplastik, einer Myringoplastik, einer Stapesplastik, eine Stapedektomie, eine Stapedotomie und/oder eine Cholesteatom-Entfernung.

**Fig. 4** schließlich zeigt in vergrößertem Detail eine mögliche Ausführungsform der erfindungsgemäßen Kavitäten 13 im geöffneten Zustand ohne Gasfüllung. Gut zu erkennen sind zwei **Öffnungen 13'; 13".** Mindestens eine davon dient dem Befüllen der Kavität 13 mit Gas oder Gasgemisch. Nach dem Einfüllen des Gases werden dann anschließend sämtliche Öffnungen 13'; 13" außer der mit der Pumpeinrichtung 21 verbundenen fluiddicht versiegelt, beispielsweise thermisch, vorzugsweise mittels Einwirkung von UV-Strahlung. Möglich ist aber auch der Einsatz von -in der Zeichnung allerdings nicht dargestellten- Verschluss-Stopfen.

Vorher werden die Kavitäten 13 der Detektionsvorrichtung mittels eines 3D-Druckverfahrens hohl und röhrenförmig hergestellt, vorzugsweise auf der Grundlage von hochauflösenden CT-Datensätzen von Originalen der nachzubildenden Bereiche des menschlichen Körpers. Dabei werden die Kavitäten 13 vorzugsweise in einem Arbeitsgang mit dem ersten Funktionsabschnitt 12' gedruckt, der einen Bereich des humanen Knochensystems abbildet.

Ein typischer chirurgischer Trainingseingriff mit Hilfe des erfindungsgemäßen Trainingssystems 10 zeichnet sich dadurch aus, dass ein trainierender Chirurg mittels eines invasiven chirurgischen Instruments, insbesondere mittels eines Skalpells, eines Bohrers oder einer Fräse, den lehrbuchmäßigen Ablauf einer solchen Operation an der erfindungsgemäß modifizierten der Simulationseinheit 11 übt.

Bei einer Verletzung einer in den einen Bereich des humanen Weichteilsystems nachstellenden zweiten Funktionsabschnitt 12" eingearbeiteten Kavität 13 durch den trainierenden Chirurgen während des chirurgischen Trainingseingriffs tritt Druckgas aus der verletzten Kavität 13 aus und der zugeordnete Drucksensor 23 ermittelt einen gegenüber dem vorgegebenen Betriebsdruck erniedrigten Überdruck in der Kavität 13 und meldet diesen dem Rückkopplungsmodul 15. Letzteres teilt daraufhin dem Chirurgen mit, dass die Bedingung p_{Ü} > p_{U} nicht mehr für jede der Kavitäten 13 erfüllt und insbesondere welche bestimmte Kavität 13 davon betroffen ist. Der trainierende Chirurg kann dies dann einer Verletzung des mit der entsprechenden Kavität 13 modellierten Abschnitts der Weichteil-Anatomie, insbesondere einer Ader, einer Sehne, eines Muskels oder eines Nervs, durch das verwendete invasive chirurgische Instrument zuordnen.

### Bezugszeichenliste:

- 10: Trainingssystem
- 11: Simulationseinheit
- 12': erster Funktionsabschnitt (Knochensystem)
- 12": zweiter Funktionsabschnitt (Weichteilsystem)
- 12a": nervus facialis
- 12b": arteria carotis interna
- 12‴: dritter Funktionsabschnitt (Knorpelsystem)
- 13: Kavität(en)
- 13'; 13": Öffnung(en)
- 14: weiter(e) Sensor(en)
- 15: Rückkopplungsmodul
- 16: Verarbeitungs- und Anzeigeeinheit
- 17: Mittelohr-Nachbildung
- 17a: Stapes
- 17b: Incus
- 17c: Malleus
- 17d: Trommelfell
- 21: Pumpeinrichtung
- 22: Gaszuleitung(en)
- 23: Drucksensor(en)

### Referenzliste

Für die Beurteilung der Patentfähigkeit in Betracht gezogene Publikationen:
[00] US 2014/0051050 A1
[0] DE 11 2006 003 722 B4
[1] DE 10 2018 118 918 B3
[2] DE 10 2005 041 942 A1
[3] G. Strauß et al., "Evaluation of eines Trainingssystems für die Felsenbeinchirurgie mit opto-elektronischer Detektion", HNO 2009 · 57:999-1009, Springer Medizin Verlag, 20. August 2009
[4] Shawn B. Mathews et al., "Incus and Stapes Footplate Simulator", Laryngoscope 107: December 1997, 1614-1616
[5] A. O. Owa et al., "A middle-ear simulator for practicing prosthesies placement for otosclerosis surgery using ward-based materials", The Journal of Laryngology & Otology, June 2003, Vol. 117, pp. 490-492
[6] Robert Mills et al., "Surgical skills training in middle-ear surgery", The Journal of Laryngology & Otology, March 2003, Vol. 117, pp. 159-163
[7] Evan A. Longfield et al., "3D Printed Pediatric Temporal Bone: A Novel Training Model", Otology & Neurotology, 2015, 36:793-795
[8] Konrad Entsfellner et al., "A new physical temporal bone and middle ear model with complete ossicular chain for simulating surgical procedures", Proceedings of the 2015 IEEE Conference of Robotics and Biomimetics, Zhuhai, China, pp. 1654-1659
[9] Matthew M. Dedmon et al., "Development and Validaton of a Modular Endoscopic Ear Surgery Skills Trainer", Otology & Neurotology, 2017, 38:1193-1197
[10] Yann Nguyen et al., "Modifications to a 3D-printed temporal bone model for augmented stapes fixation surgery teaching", Eur Arch Otorhinolaryngol, 2017, 274:2733-2739
[11] T. Beleites et al., "Von der Rekonstruktion zur Funktion; Tympanoplastik-Training mit Real-Time Feedback", HNO 7, 2021, 69:556-561
[12] Jan Christoffer Luers et al., "Surgical anatomy and pathology of the middle ear", J. Anat. (2016) 228, pp338-353

## Patentansprüche

1. Trainingssystem (10) zur Durchführung von chirurgischen Eingriffen an einem mechanischen Modellobjekt mit einem anatomischen Präparat oder einer Simulationseinheit (11) zur Darstellung von Teilen des menschlichen Körpers, umfassend mindestens einen ersten Funktionsabschnitt (12'), der einen Bereich des humanen Knochensystems abbildet, sowie einen zweiten Funktionsabschnitt (12"), der einen Bereich des humanen Weichteilsystems nachstellt, und mit einer Detektionsvorrichtung zur Messung von ausgewählten, zeitlich veränderlichen Parametern des Präparats oder der Simulationseinheit (11) während eines chirurgischen Trainingseingriffs, wobei die Detektionsvorrichtung mindestens eine in das anatomische Präparat oder in die Simulationseinheit (11) eingearbeitete, in sich abgeschlossene Kavität (13) umfasst, welche während eines chirurgischen Trainingseingriffs mit einem Fluid gefüllt ist, wobei das Fluid in den Kavitäten (13) ein Gas oder Gasgemisch ist; wobei eine Pumpeinrichtung (21) vorhanden ist, die während des Betriebs des Trainingssystems (10) durch in die Kavitäten (13) führende Gaszuleitungen (22) das Gas oder Gasgemisch in den Kavitäten (13) permanent auf einem gegenüber dem Umgebungsdruck p_{U} höheren Überdruck p_{Ü} hält; wobei die Detektionsvorrichtung für jede der Kavitäten (13) einen eigenen Drucksensor (23) enthält, welcher jeweils einer der Kavitäten (13) zugeordnet ist und den jeweiligen aktuellen Innendruck p_{I} in dieser Kavität (13) permanent misst; und wobei das Trainingssystem (10) ein Rückkopplungsmodul (15) umfasst, welches die mit den Drucksensoren (23) gemessenen aktuellen Druck-Daten der Kavitäten (13) aufnimmt, permanent ermittelt, ob die Bedingung p_{Ü} > p_{U} für jede der Kavitäten (13) erfüllt ist und bei etwaiger Messung eines Druckabfalls in einer Kavität (13), insbesondere verursacht durch eine mechanische Verletzung derselben, diese Information dem am Trainingssystem (10) trainierenden Chirurgen in einer für ihn erkennbaren Weise weitergibt,
**dadurch gekennzeichnet,**
**dass** die Detektionsvorrichtung weitere Sensoren (14) aufweist, welche während eines chirurgischen Trainingseingriffs mit dem Trainingssystem (10) den aktuellen Krafteintrag auf nachgestellte Mittelohr-Strukturen (17; 17a; 17b; 17c; 17d), sowie den Versorgungserfolg mit aktiven oder passiven Mittelohrimplantaten durch den trainierenden Chirurgen in Echtzeit überwachen und entsprechende elektrische Signale an das Rückkopplungsmodul (15) übertragen, welches diese in optische oder akustische Information umwandelt und an den trainierenden Chirurgen weitergibt.

2. Trainingssystem nach Anspruch 1, **dadurch gekennzeichnet, dass** das Gas in den Kavitäten (13) trocken und nicht-korrosiv ist, insbesondere Luft, die vorzugsweise aus der Umgebung des Trainingssystems (10) mit Hilfe der Pumpeinrichtung (21) entnommen werden kann.

3. Trainingssystem nach einem der Ansprüche 1 oder 2, **dadurch gekennzeichnet, dass** die Pumpeinrichtung (21) so eingerichtet ist, dass sie den Überdruck p_{Ü} in den Kavitäten (13) während des Betriebs konstant hält, zumindest solange keine mechanische Verletzung einer Kavität (13) vorliegt.

4. Trainingssystem nach einem der vorhergehenden Ansprüche, **dadurch gekennzeichnet, dass** der Überdruck p_{Ü} in den Kavitäten (13) zwischen 100hPa und 500hPa, vorzugsweise etwa 300hPa, über dem Umgebungsdruck p_{U} liegt.

5. Trainingssystem nach einem der vorhergehenden Ansprüche, **dadurch gekennzeichnet, dass** die Pumpeinrichtung (21) eine oder mehrere Pumpen mit variabel einstellbarer Fördermenge umfasst.

6. Trainingssystem nach einem der vorhergehenden Ansprüche, **dadurch gekennzeichnet, dass** die Pumpeinrichtung (21) eine oder mehrere erschütterungsarme Mikropumpen, insbesondere miniaturisierte Doppelmembranpumpen, umfasst.

7. Trainingssystem nach Anspruch 6, **dadurch gekennzeichnet, dass** die Doppelmembranpumpen mit jeweils zwei Piezo-Aktoren betreibbar sind.

8. Trainingssystem nach einem der vorhergehenden Ansprüche, **dadurch gekennzeichnet, dass** die Drucksensoren (23) temperatur-kompensiert sind.

9. Trainingssystem nach einem der vorhergehenden Ansprüche, **dadurch gekennzeichnet, dass** die Drucksensoren (23) einen oder mehrere piezo-resistive Sensoren, vorzugsweise miniaturisierte Silizium-Drucksensoren, umfassen.

10. Trainingssystem nach Anspruch 8 oder 9, **dadurch gekennzeichnet, dass** die Drucksensoren (23) einen anwendungsspezifischen integrierten Schaltkreis (="ASIC") enthalten, der die Drucksensoren (23) vorzugsweise auf Sensor-Offset, Empfindlichkeit, Genauigkeit und/oder Temperatureinflüsse kalibriert.

11. Trainingssystem nach einem der vorhergehenden Ansprüche, **dadurch gekennzeichnet, dass** die Gaszuleitungen (22) einen oder mehrere, vorzugsweise optisch transparente, Silikon-Schläuche umfassen, insbesondere Tygon-Schläuche mit Wandstärken und Innendurchmessern in der Größenordnung von jeweils 1mm.

12. Trainingssystem nach einem der vorhergehenden Ansprüche, **dadurch gekennzeichnet, dass** das Rückkopplungsmodul (15) weitere mit der Detektionsvorrichtung gemessene Parameter-Daten aufnehmen und insbesondere mittels eines Expertensystems und/oder künstlicher Intelligenz bewerten und dem Chirurgen während eines chirurgischen Trainingseingriffs auf den gemessenen Parameter-Daten basierende Informationen zur Verbesserung des aktuellen Eingriffs übermitteln kann.

13. Verfahren zur Herstellung eines Trainingssystems (10) nach einem der Ansprüche 1 bis 12, **dadurch gekennzeichnet, dass** die Kavitäten (13) der Detektionsvorrichtung mittels eines 3D-Druckverfahrens hohl und röhrenförmig, vorzugsweise auf der Grundlage von hochauflösenden CT-Datensätzen von Originalen der nachzubildenden Bereiche des menschlichen Körpers, hergestellt werden, wobei die Kavitäten (13) in einem Arbeitsgang mit dem ersten Funktionsabschnitt (12') gedruckt werden, der einen Bereich des humanen Knochensystems abbildet.

14. Verfahren zum Betrieb eines Trainingssystems (10) nach einem der Ansprüche 1 bis 12 während eines chirurgischen Trainingseingriffs am Trainingssystem (10), **dadurch gekennzeichnet, dass** ein trainierender Chirurg einen chirurgischen Trainingseingriff am mechanischen Modellobjekt des Trainingssystems (10) mit der Simulationseinheit (11) zur Darstellung von Teilen des menschlichen Körpers mittels eines invasiven chirurgischen Instruments vornimmt, insbesondere mittels eines Skalpells, eines Bohrers oder einer Fräse;
dass bei einer mechanischen Verletzung einer Kavität (13) durch den trainierenden Chirurgen während des chirurgischen Trainingseingriffs der dieser Kavität (13) zugeordnet Drucksensor (23) einen dadurch versachten Druckabfall in dieser Kavität (13) misst und dem Rückkopplungsmodul (15) meldet;
und dass das Rückkopplungsmodul (15) dem Chirurgen mitteilt, dass die Bedingung p_{Ü} > p_{U} nicht mehr für jede der Kavitäten (13) erfüllt und insbesondere welche Kavität (13) davon betroffen ist.

## Claims

1. Training system (10) for carrying out surgical procedures on a mechanical model object, which training system has an anatomical specimen or a simulation unit (11) for depicting parts of the human body, comprising at least a first functional portion (12') which represents a region of the human bone system, and a second functional portion (12") which simulates a region of the human soft tissue system, and which training system also has a detection device for measuring selected, time-varying parameters of the specimen or of the simulation unit (11) during a surgical training procedure, the detection device comprising at least one self-contained cavity (13) incorporated into the anatomical specimen or into the simulation unit (11), which self-contained cavity is filled with a fluid during a surgical training procedure, the fluid in the cavities (13) being a gas or gas mixture; a pump apparatus (21) being present which, during operation of the training system (10), through gas supply lines (22) which feed into the cavities (13), constantly maintains the gas or gas mixture in the cavities (13) at a higher overpressure p_{Ü} than the ambient pressure pu, the detection device containing a separate pressure sensor (23) for each of the cavities (13), each pressure sensor being assigned to one of the cavities (13) and constantly measuring the relevant current internal pressure p_{I} in this cavity (13); and the training system (10) comprising a feedback module (15) which receives the current pressure data, measured by the pressure sensors (23) of the cavities (13), constantly determines whether the condition p_{Ü} > pu is fulfilled for each of the cavities (13) and, in the event of a pressure drop in a cavity (13) being measured, in particular caused by mechanical damage to the cavity, passes this information on to the surgeon training on the training system (10) in a manner that is recognizable to the surgeon,
**characterized in that**
the detection device has additional sensors (14) which, during a surgical training procedure using the training system (10), monitor the current force input to simulated middle ear structures (17; 17a; 17b; 17c; 17d) as well as the success of fitting active or passive middle ear implants by the training surgeon in real time and transmit corresponding electrical signals to the feedback module (15), which converts these into optical or acoustic information and passes them on to the training surgeon.

2. Training system according to claim 1, **characterized in that** the gas in the cavities (13) is dry and non-corrosive, in particular air which can preferably be taken from the surroundings of the training system (10) by means of the pumping apparatus (21).

3. Training system according to either claim 1 or claim 2,
**characterized in that** the pumping apparatus (21) is designed to constantly maintain the overpressure p_{Ü} in the cavities (13) during operation, at least as long as there is no mechanical damage to a cavity (13).

4. Training system according to any of the preceding claims,
**characterized in that** the overpressure p_{Ü} in the cavities (13) is between 100 hPa and 500 hPa, preferably about 300 hPa, above the ambient pressure p_{U}.

5. Training system according to any of the preceding claims,
**characterized in that** the pumping apparatus (21) comprises one or more pumps, which have a variably adjustable discharge rate.

6. Training system according to any of the preceding claims,
**characterized in that** the pumping apparatus (21) comprises one or more low-vibration micropumps, in particular miniaturized double diaphragm pumps.

7. Training system according to claim 6, **characterized in that** the double diaphragm pumps can be operated with two piezo actuators each.

8. Training system according to any of the preceding claims,
**characterized in that** the pressure sensors (23) are temperature-compensated.

9. Training system according to any of the preceding claims,
**characterized in that** the pressure sensors (23) comprise one or more piezo-resistive sensors, preferably miniaturized silicon pressure sensors.

10. Training system according to claim 8 or claim 9, **characterized in that** the pressure sensors (23) contain an application-specific integrated circuit (="ASIC") which calibrates the pressure sensors (23) preferably for sensor offset, sensitivity, accuracy and/or temperature influences.

11. Training system according to any of the preceding claims,
**characterized in that** the gas supply lines (22) comprise one or more, preferably optically transparent, silicone tubes, in particular Tygon tubes which have wall thicknesses and inner diameters in the order of 1mm each.

12. Training system according to any of the preceding claims,
**characterized in that** the feedback module (15) can receive additional parameter data measured by the detection device and evaluate the data in particular by means of an expert system and/or artificial intelligence, and can transmit information based on the measured parameter data to the surgeon during a surgical training procedure in order to improve the current procedure.

13. Method for producing a training system (10) according to any of claims 1 to 12, **characterized in that** the cavities (13) of the detection device are produced such that they are hollow and tubular by means of a 3D printing process, preferably on the basis of high-resolution CT datasets of originals of the regions of the human body to be reproduced, the cavities (13) being printed in one action with the first functional portion (12'), which represents a region of the human bone system.

14. Method for operating a training system (10) according to any of claims 1 to 12 during a surgical training procedure on the training system (10),
**characterized in that** a training surgeon performs, by means of an invasive surgical instrument, in particular by means of a scalpel, a drill or a fraise, a surgical training procedure on the mechanical model object of the training system (10) comprising the simulation unit (11) for depicting parts of the human body;
**in that** in the event of mechanical damage to a cavity (13) by the training surgeon during the surgical training procedure, the pressure sensor (23) assigned to this cavity (13) measures a resulting pressure drop in this cavity (13) and reports the pressure drop to the feedback module (15);
and **in that** the feedback module (15) informs the surgeon that the condition p_{Ü} > pu is no longer fulfilled for each of the cavities (13), and in particular informs the surgeon which cavity (13) is affected.

## Revendications

1. Système d'entraînement (10) pour la réalisation d'interventions chirurgicales sur un objet modèle mécanique comportant une préparation anatomique ou une unité de simulation (11) pour la représentation de parties du corps humain, comprenant au moins une première section fonctionnelle (12') qui reproduit une zone du système osseux humain, ainsi qu'une seconde section fonctionnelle (12") qui reproduit une zone du système des parties molles humaines, et comportant un dispositif de détection pour la mesure de paramètres sélectionnés et variables dans le temps de la préparation ou de l'unité de simulation (11) pendant une intervention chirurgicale d'entraînement, dans lequel le dispositif de détection comprend au moins une cavité (13) fermée en soi et incorporée dans la préparation anatomique ou dans l'unité de simulation (11), laquelle cavité est remplie d'un fluide pendant une intervention chirurgicale d'entraînement, dans lequel le fluide dans les cavités (13) est un gaz ou un mélange de gaz ; dans lequel un appareil de pompage (21) est prévu, lequel, pendant le fonctionnement du système d'entraînement (10), maintient en permanence le gaz ou le mélange de gaz dans les cavités (13) à une surpression p_{Ü} supérieure à la pression ambiante pu au moyen de conduites d'amenée de gaz (22) menant dans les cavités (13) ; dans lequel le dispositif de détection contient, pour chacune des cavités (13), un capteur de pression (23) propre qui est associé à respectivement l'une des cavités (13) et qui mesure en permanence la pression interne p_{I} actuelle respective dans ladite cavité (13) ; et dans lequel le système d'entraînement (10) comprend un module de rétroaction (15) qui enregistre les données de pression actuelles des cavités (13) mesurées par les capteurs de pression (23), détermine en permanence si la condition p_{Ü} > p_{U} est remplie pour chacune des cavités (13) et, en cas de mesure éventuelle d'une chute de pression dans une cavité (13), en particulier provoquée par une atteinte mécanique de celle-ci, transmet lesdites informations au chirurgien s'entraînant sur le système d'entraînement (10) d'une manière reconnaissable pour lui,
**caractérisé en ce que**
le dispositif de détection présente d'autres capteurs (14) qui, pendant une intervention chirurgicale d'entraînement avec le système d'entraînement (10), surveillent en temps réel l'application actuelle de force sur des structures d'oreille moyenne (17 ; 17a ; 17b ; 17c ; 17d) reconstituées, ainsi que le succès de l'approvisionnement en implants d'oreille moyenne actifs ou passifs par le chirurgien qui s'entraîne, et transmettent des signaux électriques correspondants au module de rétroaction (15) qui les transforme en informations optiques ou acoustiques et les transmet au chirurgien qui s'entraîne.

2. Système d'entraînement selon la revendication 1, **caractérisé en ce que** le gaz dans les cavités (13) est sec et non corrosif, en particulier est de l'air, qui peut de préférence être prélevé dans l'environnement du système d'entraînement (10) à l'aide de l'appareil de pompage (21).

3. Système d'entraînement selon l'une des revendications 1 ou 2, **caractérisé en ce que** l'appareil de pompage (21) est conçu de sorte qu'il maintient constante la surpression p_{Ü} dans les cavités (13) pendant le fonctionnement, au moins tant qu'il n'y a pas d'atteinte mécanique d'une cavité (13).

4. Système d'entraînement selon l'une des revendications précédentes, **caractérisé en ce que** la surpression p_{Ü} dans les cavités (13) est comprise entre 100 hPa et 500 hPa, de préférence est d'environ 300 hPa, au-dessus de la pression ambiante pu.

5. Système d'entraînement selon l'une des revendications précédentes, **caractérisé en ce que** l'appareil de pompage (21) comprend une ou plusieurs pompes à débit réglable de manière variable.

6. Système d'entraînement selon l'une des revendications précédentes, **caractérisé en ce que** l'appareil de pompage (21) comprend une ou plusieurs micropompes à faible vibration, en particulier des pompes à double membrane miniaturisées.

7. Système d'entraînement selon la revendication 6, **caractérisé en ce que** les pompes à double membrane peuvent fonctionner au moyen de respectivement deux actionneurs piézoélectriques.

8. Système d'entraînement selon l'une des revendications précédentes, **caractérisé en ce que** les capteurs de pression (23) sont compensés en température.

9. Système d'entraînement selon l'une des revendications précédentes, **caractérisé en ce que** les capteurs de pression (23) comprennent un ou plusieurs capteurs piézorésistifs, de préférence des capteurs de pression en silicium miniaturisés.

10. Système d'entraînement selon la revendication 8 ou 9,
**caractérisé en ce que** les capteurs de pression (23) contiennent un circuit intégré spécifique à l'utilisation (= « ASIC ») qui calibre les capteurs de pression (23) de préférence en fonction du décalage, de la sensibilité, de la précision et/ou des influences de la température.

11. Système d'entraînement selon l'une des revendications précédentes, **caractérisé en ce que** les conduites d'amenée de gaz (22) comprennent un ou plusieurs tuyaux en silicone, de préférence optiquement transparents, en particulier des tuyaux en Tygon comportant des épaisseurs de paroi et des diamètres intérieurs de l'ordre de respectivement 1mm.

12. Système d'entraînement selon l'une des revendications précédentes, **caractérisé en ce que** le module de rétroaction (15) peut enregistrer d'autres données de paramètres mesurées avec le dispositif de détection et les évaluer en particulier au moyen d'un système expert et/ou d'une intelligence artificielle et transmettre au chirurgien, pendant une intervention chirurgicale d'entraînement, des informations basées sur les données de paramètres mesurées pour améliorer l'intervention actuelle.

13. Procédé pour la fabrication d'un système d'entraînement (10) selon l'une des revendications 1 à 12, **caractérisé en ce que** les cavités (13) du dispositif de détection sont fabriquées de manière à être creuses et tubulaires au moyen d'un procédé d'impression 3D, de préférence sur la base d'ensembles de données de tomodensitométrie à haute résolution d'originaux des zones du corps humain à reproduire, dans lequel les cavités (13) sont imprimées en une seule opération avec la première section fonctionnelle (12') qui reproduit une zone du système osseux humain.

14. Procédé permettant de faire fonctionner un système d'entraînement (10) selon l'une des revendications 1 à 12 pendant une intervention chirurgicale d'entraînement sur le système d'entraînement (10), **caractérisé en ce qu'**un chirurgien qui s'entraîne réalise une intervention chirurgicale d'entraînement sur l'objet modèle mécanique du système d'entraînement (10) avec l'unité de simulation (11) pour la représentation de parties du corps humain au moyen d'un instrument chirurgical invasif, en particulier au moyen d'un scalpel, d'un foret ou d'une fraise ;
**en ce que**, en cas d'atteinte mécanique d'une cavité (13) par le chirurgien qui s'entraîne pendant l'intervention chirurgicale d'entraînement, le capteur de pression (23) associé à ladite cavité (13) mesure une chute de pression résultante dans ladite cavité (13) et la signale au module de rétroaction (15) ;
et **en ce que** le module de rétroaction (15) informe le chirurgien que la condition p_{Ü} > pu n'est plus remplie pour chacune des cavités (13) et en particulier quelle cavité (13) est concernée.
